# EUROPÄISCHE PATENTSCHRIFT

(11) **EP 3 953 630 B1**
(45) Veröffentlichungstag und Bekanntmachung des Hinweises auf die Patenterteilung: **02.08.2023**
(21) Anmeldenummer: 20719575.1
(22) Anmeldetag: 30.03.2020
(51) Int. Cl.: F16L 23/06, F16L 23/12, F16L 23/18

(54) **FLEXIBEL EINSETZBARE PROFILSCHELLE**
FLEXIBLY INSERTABLE PROFILED CLAMP
COLLIER PROFILÉ POUVANT ÊTRE INSÉRÉ DE MANIÈRE FLEXIBLE

(30) Priorität: 08.04.2019 DE 102019109196
(43) Veröffentlichungstag der Anmeldung: 16.02.2022
(73) Patentinhaber: NORMA Germany GmbH, 63477 Maintal (DE)
(72) Erfinder: KRÄMER, Markus, 63477 Maintal (DE); LANTSMANN, Natan, 63477 Maintal (DE)
(74) Vertreter: Patentanwälte Olbricht Buchhold Keulertz
(86) Internationale Anmeldenummer: PCT/EP2020/058992
(87) Internationale Veröffentlichungsnummer: WO 2020/207846

(56) Entgegenhaltungen:
- CN-A- 108 506 615
- GB-A- 126 655
- US-A1- 2013 127 162

## Beschreibung

Die Erfindung betrifft eine Profilschelle mit einem Schellenband und einer Spanneinrichtung, die zwei in Umfangsrichtung mit einem Abstand zueinander angeordnete Spannbacken aufweist, wobei die Spannbacken jeweils endseitig am Schellenband angeordnet sind und über mindestens ein Spannmittel aufeinander zu bewegbar sind, wobei an der Innenseite des Schellenbandes mindestens zwei umfangsseitig voneinander beabstandete Profilsegmente angeordnet sind.

Zum fluiddichten Verbinden von zwei Leitungen werden üblicherweise Profilschellen eingesetzt. Derartige Leitungen weisen endseitig angeordnete Verbindungsflansche auf, welche radial über die jeweilige Leitung hinausragen. Die Profilschelle kann die Verbindungsflansche der Leitungen an ihren einander abgewandten Stirnseiten umgreifen und axial zusammendrücken. Das Zusammendrücken der Verbindungsflansche erfolgt durch das Prinzip der schiefen Ebene. Hierfür weist die Profilschelle Profilsegmente mit einem sich radial nach Außen verjüngenden Profil auf.

US 2013/127162 A1 offenbart eine hybride V-Band-Kupplung aus Blech zur Befestigung von Umfangsflanschen an zusammenpassenden Enden von rohrförmigen Elementen.

Profilschellen sind häufig vollständig aus einem Metall hergestellt, um entsprechende Spannkräfte einbringen zu können. Dabei sind die Profilsegmente üblicherweise an einem Schellenband durch Schweißverbindungen oder Lötverbindungen befestigt oder das Schellenband ist selbst mit einem entsprechenden Profilquerschnitt versehen. Die Herstellung der Profilschellen ist insbesondere durch das Einbringen der Schweißverbindungen aufwändig und schränkt die Materialauswahl ein. Darüber hinaus können metallische Profilschellen empfindliche bzw. zerbrechliche Verbindungsflansche, die beispielsweise aus einem Kunststoff oder einem Glas bestehen, beschädigen.

Aufgabe der Erfindung ist es daher, eine mit geringem Aufwand herstellbare Profilschelle bereitzustellen, die auch bei Verbindungsflanschen aus empfindlichen Werkstoffen einsetzbar ist. Merkmale der Erfindung sind in Anspruch 1 angegeben. Bevorzugte Ausgestaltungen sind Gegenstand der Ansprüche 2 bis 6.

Die Erfindung betrifft eine Profilschelle mit einem Schellenband und einer Spanneinrichtung. Die Spanneinrichtung weist zwei in Umfangsrichtung in einem Abstand zueinander angeordnete Spannbacken auf. Die Spannbacken sind jeweils endseitig am Schellenband angeordnet. Durch mindestens ein Spannmittel sind die Spannbacken aufeinander zu bewegbar. Durch das Spannmittel kann der Abstand zwischen den Spannbacken verringert und die Profilschelle gespannt bzw. geschlossen werden. An einer Innenseite des Schellenbandes sind mindestens zwei umfangsseitig voneinander beabstandete Profilsegmente angeordnet, wobei die Profilsegmente über jeweils mindestens eine Einrastverbindung mit dem Schellenband verbunden sind.

Das Schellenband und die Spannbacken können vorzugsweise aus einem metallischen Werkstoff hergestellt sein. Das Spannmittel der Spanneinrichtung kann beispielsweise in Form einer lösbaren oder unlösbaren Schraubverbindung oder als ein einstellbarer oder starrer Kniehebelverschluss oder ähnliches ausgeführt sein.

Die Profilsegmente sind vorzugsweise über Einrastverbindungen an dem Schellenband befestigt. Hierdurch ist ein Schweißen oder Löten zum Befestigen der Profilsegmente nicht mehr notwendig. Somit können unterschiedliche Materialkombinationen bei der erfindungsgemäßen Profilschelle verwendet werden. Insbesondere können Materialkombinationen, die nicht miteinander schweißbar oder lötbar sind, eingesetzt werden. Die Profilsegmente können beispielsweise aus einem Faserverbundwerkstoff, einem Elastomer, einem Thermoplast, einem Duroplast und dergleichen hergestellt sein. Die Profilsegmente können auch aus einem metallischen Werkstoff bestehen, wobei aufgrund der Einrastverbindungen die Montage der Profilsegmente am Schellenband vereinfacht und beschleunigt werden kann. Eine derartige Profilschelle kann somit Profilsegmente aus gegenüber einem Metall "weichen" Material aufweisen und somit auch bei Verbindungsflanschen aus Glas, Verbundwerkstoffen oder Kunststoffen verwendbar sein. Erfindungsgemäß weist das Schellenband mindestens eine Öffnung zum Ausbilden der Einrastverbindung auf. An einer dem Schellenband zugewandten Seite des Profilsegments ist mindestens ein in die Öffnung des Schellenbands einsetzbares Rastelement angeordnet. Die mindestens eine Einrastverbindung kann somit durch das Zusammenwirken von der Öffnung mit mindestens einem Rastelement des Profilsegments ausgebildet werden.

Das Schellenband kann vorzugsweise für jede verwendete Profilschelle mindestens eine Öffnung aufweisen, welche jeweils mindestens ein Rastelement der Profilschelle aufnehmen kann. Vorteilhafterweise kann in jede Öffnung ein Rastelement einsetzbar sein. Dabei kann die Abmessung der Öffnung derart dimensioniert sein, dass das Rastelement formschlüssig hineinragen und einrasten kann. Hierdurch kann jedes Profilsegment durch mindestens eine ausgebildete Einrastverbindung ortsfest am Schellenband positioniert werden. Alternativ oder zusätzlich kann mindestens eine Öffnung vorgesehen sein, welche in Umfangsrichtung des Schellenbandes länglich geformt ist, wobei eine derartige Öffnung auch mehrere Rastelemente eines oder mehrerer Profilsegmente zum Ausbilden mehrerer Einrastverbindungen aufnehmen kann.

Die Öffnungen können vorzugsweise in axialer Richtung bzw. quer zur Umfangsrichtung des Schellenbandes zentriert in das Schellenband eingebracht sein. Analog können die Rastelemente in axialer Richtung zentriert an einer dem Schellenband zugewandten Seite des Profilsegments angeordnet sein.

Die Einrastverbindung kann technisch besonders einfach ausgestaltet und schnell herstellbar sein, wenn das Rastelement des Profilsegments formschlüssig und/oder reibschlüssig in die mindestens eine Öffnung des Schellenbands einsetzbar ist. Hierdurch kann ein manuell oder automatisiert durchgeführtes Einsetzen der Profilsegmente in das Schellenband ausreichen, um eine dauerhafte Verbindung zwischen dem Schellenband und den Profilsegmenten auszubilden.

Erfindungsgemäß weist die Öffnung des Schellenbands eine in Umfangsrichtung des Schellenbandes ausgerichtete längliche Form auf. Eine länglich geformte Öffnung kann zum Aufnehmen von mehreren Rastelementen dienen. Alternativ oder zusätzlich können ein oder mehrere Rastelemente in die längliche Öffnung hineingesetzt werden und eine in Umfangsrichtung bewegbare Einrastverbindung ausbilden. Die längliche Öffnung dient somit als Schiene und ermöglicht eine definierte Beweglichkeit der Profilsegmente in Umfangsrichtung, also entlang dem Verlauf der Öffnung bzw. des Schellenbandes. Hierdurch kann die beim Spannen der Profilschelle entstehende Reibkraft zwischen den Profilsegmenten und den Verbindungsflanschen verringert werden.

Gemäß einer weiteren Ausführungsform ist das mindestens eine Rastelement an der dem Schellenband zugewandten Seite des Profilsegments angeordnet und stoffschlüssig mit diesem ausgebildet. Vorzugsweise kann das Profilsegment aus einem Kunststoff bestehen und ein oder mehrere rückseitige Rastelemente zum Herstellen von Einrastverbindungen mit dem Schellenband aufweisen. Ein derartiges Profilsegment kann beispielsweise durch ein Spritzguss-Verfahren hergestellt werden. Alternativ können derartige Profilsegmente mit Rastelementen auch durch additive Fertigungsverfahren hergestellt werden. Die Rastelemente können auch nachträglich rückseitig an die Profilsegmente, beispielsweise durch Kleben oder Schweißen, positioniert werden. Die Rückseite eines Profilsegments ist die dem Schellenband zugewandte Seite des Profilsegments.

Rastelemente können technisch besonders einfach hergestellt werden, wenn das mindestens eine Rastelement gestanzt und/oder gebogen in das Profilsegment eingebracht ist. Hierdurch kann das Profilsegment aus einem Kunststoff oder einem Metall bestehen. An den Einrastverbindungspunkten kann unter Einwirkung von Druck und Temperatur Material rückseitig aus dem Profilsegment hinausgepresst werden und das Rastelement bilden. Das rückseitig hinausgepresste Material kann zum Herstellen einer formschlüssigen oder reibschlüssigen Einrastverbindung verwendbar sein.

Nach einer weiteren Ausführungsform weist das mindestens eine Profilsegment ein rundes, ein rechteckiges, ein dreieckiges oder ein trapezförmiges Profil auf, welches an einer dem Schellenband abgewandten Seite offen ist. Das Profilsegment weist dabei zwei Profilflanken auf, die über einen Profilboden miteinander verbunden sind Es können unterschiedlich geformte Profilsegmente mit einem universell einsetzbaren Schellenband kombiniert werden. Insbesondere können hierdurch Profilschellen bereitgestellt werden, welche sich lediglich in den Profilsegmenten unterscheiden, indem lediglich die Profilsegmente variiert werden. Somit kann der Herstellungsprozess vereinfacht werden.

Gemäß einer weiteren Ausgestaltung ist das Schellenband aus einem gleichen oder einem unterschiedlichen Material wie die mindestens zwei Profilsegmente ausgebildet. Aufgrund der Einrastverbindung können Materialen miteinander kombiniert werden, welche miteinander nicht verklebbar oder verschweißbar sind. Beispielsweise können das Schellenband mit der Spanneinrichtung aus einem Metall und die Profilsegmente aus einem Kunststoff bestehen. Insbesondere können die Profilsegmente aus einem faserverstärkten Kunststoff, einem Carbon, einem Elastomer und dergleichen bestehen. Die Profilsegmente können alternativ oder zusätzlich zumindest bereichsweise durch Metallstreifen oder Rippen versteift oder verstärkt sein. Dabei können die Profilsegmente auch aus einem Metallgrundkörper bestehen, welcher von einem Kunststoff bedeckt ist.

Da die Profilsegmente nicht mehr mit dem Schellenband geschweißt werden, sondern durch eine Einrastverbindung ineinander "geklickt" werden, wird eine größere Materialvielfalt bei der Herstellung der Profilschelle ermöglicht.

Der Einsatz separater Dichtungen und Zwischenringe zwischen den Verbindungsflanschen kann entfallen, da erfindungsgemäß ein Dichtelement an mindestens einem Profilsegment positioniert ist.

Das Dichtelement verläuft vorzugsweise an der dem Schellenband abgewandten inneren Seite der Profilsegmente. Beispielsweise kann das Dichtelement in Form eines Dichtrings oder einer ringförmigen Flachdichtung ausgeführt sein, welche in Umfangsrichtung entlang der inneren Seite der Profilsegmente verläuft und sich radial nach innen erstreckt. Vorzugsweise ist das Dichtelement ununterbrochen, also als geschlossener Kreis ausgebildet, und ist zumindest bereichsweise mit dem Schellenband und/oder mit mindestens einem Profilsegment verbunden. Hierdurch kann ein Ausrichten des Dichtelements gegenüber den Verbindungsflanschen entfallen.

Das Dichtelement kann besonders einfach an den Profilsegmenten angeordnet und ausgerichtet werden, da erfindungsgemäß mindestens eine Lamelle zum Aufnehmen des Dichtelements an der dem Schellenband abgewandten innere Seite des Profilsegments angeordnet ist.

Bevorzugterweise ist die mindestens eine Lamelle in axialer Richtung zentriert in das offene Profil eingebracht. Das Dichtelement kann vorzugsweise eine radial eingebrachte Aussparung bzw. Nut aufweisen, in welche die Lamelle hineinragen und das Dichtelement fixieren kann. Insbesondere kann die mindestens eine Lamelle zum mit unterschiedlichen Dichtelementen kombinierbar sein.

Nach einer weiteren Ausführungsform ist die mindestens eine Lamelle in axialer Richtung starr oder flexibel ausgeführt. Hierdurch kann abhängig von der Anwendung der Profilschelle ein axialer Ausgleich bei der Positionierung der Verbindungsflansche in den Profilsegmenten der Profilschelle ermöglicht werden. Bei starr ausgeführten Lamellen kann ein fester Verbindungspunkt in der Profilschelle als Verbindungspunk der Verbindungsflansche definiert werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Darstellung einer Profilschelle gemäß einer Ausführungsform,
- Fig. 2: einen Querschnitt A-A aus Fig. 1
- Fig. 3: eine perspektivische Darstellung einer Profilschelle gemäß einer nicht unter die Ansprüche fallenden Ausführungsform und
- Fig. 4: einen Querschnitt B-B aus Fig. 3.

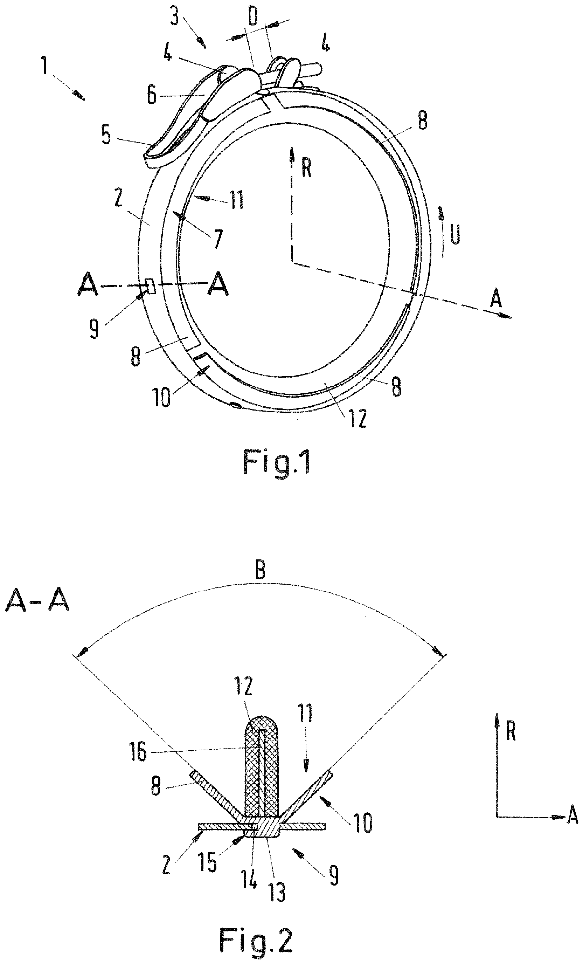

In der Fig. 1 ist eine Profilschelle 1 gemäß einer Ausführungsform der Erfindung in einer perspektivischen Ansicht dargestellt. Die Profilschelle 1 weist ein Schellenband 2 und eine Spanneinrichtung 3 auf. Das Schellenband 2 ist aus einem Metall oder einer Metalllegierung, wie beispielsweise Edelstahl, hergestellt.

Die Spanneinrichtung 3 weist zwei in Umfangsrichtung mit einem Abstand D zueinander angeordnete Spannbacken 4 auf. Die Spannbacken 4 sind jeweils endseitig am Schellenband 2 angeordnet. Durch mindestens ein Spannmittel 5 sind die Spannbacken aufeinander zu bewegbar. Gemäß dem dargestellten Ausführungsbeispiel ist die Spanneinrichtung 3 als ein Kniehebelverschluss ausgestaltet.

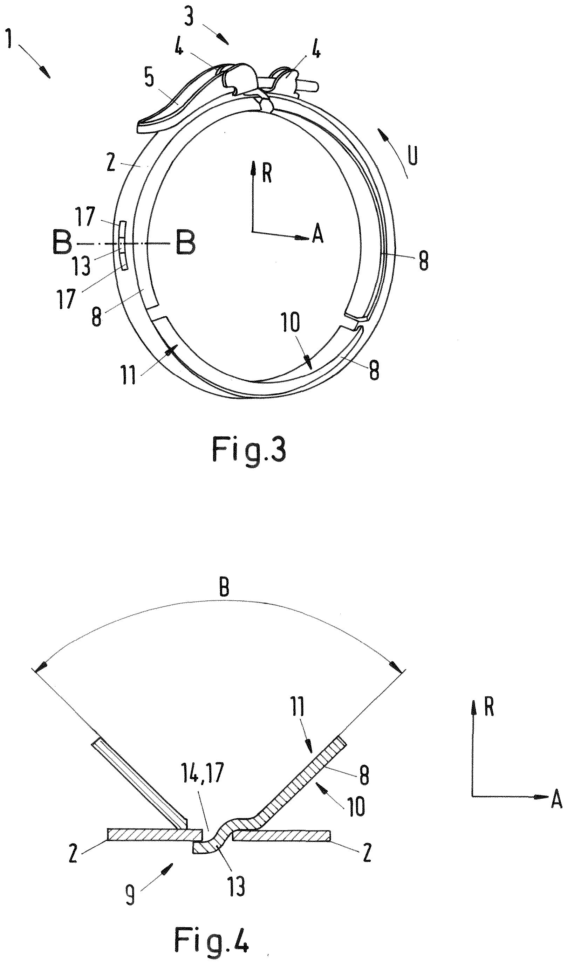

Als Spannmittel 5 dient ein Hebel, welcher über eine Schraube 6 verstellbar ist. Durch die Schraube 6 kann der Abstand D zwischen den Spannbacken 4 im geschlossenen Zustand des Spannmittels 5 eingestellt werden. In Figur 1 und 3 ist die Spanneinrichtung 3 in einem geschlossenen Zustand dargestellt.

An einer Innenseite 7 des Schellenbandes 2 sind gemäß dem Ausführungsbeispiel drei Profilsegmente 8 angeordnet. Die Profilsegmente 8 sind in Umfangsrichtung U voneinander beabstandet. Hierzu sind die Profilsegmente 8 ortsfest durch Einrastverbindungen 9 mit dem Schellenband 2 verbunden.

Die Profilsegmente 8 weisen eine dem Schellenband 2 zugewandte Seite 10 bzw. Rückseite und eine dem Schellenband 2 abgewandte innere Seite 11 auf. An der Rückseite 10 sind die Profilsegmente 8 an der Innenseite 7 des Schellenbandes 2 über die Einrastverbindungen 9 gekoppelt. Gemäß dem Ausführungsbeispiel ist jedes Profilsegment 8 an zwei Einrastverbindungen 9 mit dem Schellenband 2 angeordnet.

An der dem Schellenband 2 abgewandten inneren Seite 11 des Profilsegments 8 ist ein Dichtelement 12 vorgesehen. Das Dichtelement 12 ist als eine ringförmige Dichtlippe ausgestaltet und verläuft umfangsseitig innerhalb der Profilsegmente 8.

Die Fig. 2 zeigt einen Querschnitt A-A aus Fig. 1 zum Verdeutlichen des Aufbaus einer Einrastverbindung 9. Die Einrastverbindung 9 wird durch ein Zusammenwirken eines Rastelements 13 mit einer im Schellenband 2 ausgebildeten Öffnung 14 ausgebildet.

Das Rastelement 13 ist an der Rückseite 10 des Profilsegment 8 ausgebildet. Gemäß dem dargestellten Beispiel kann das Profilsegment 8 einteilig bzw. integral mit dem mindestens einen Rastelement 13 hergestellt sein. Beispielsweise können das Profilsegment 8 und das mindestens eine Rastelement 13 aus einem Kunststoff oder einem faserverstärkten Kunststoff hergestellt sein.

Die Öffnung 14 ist in das Schellenband 2 eingebracht. Beispielsweise können mehrere Öffnungen 14 in einem definierten Abstand voneinander in das Schellenband 2 eingestanzt sein. Die Öffnung 14 und das Rastelement 13 weisen bei diesem Ausführungsbeispiel eine rechteckige Grundform auf.

Das Rastelement 13 ist in axialer Richtung A aufgrund eines Vorsprungs 15 geringfügig größer geformt als eine axiale Ausdehnung der Öffnung 14. Hierdurch kann mit einem definierten Kraftaufwand in radialer Richtung R ein Rastelement 13 durch die Öffnung 14 hindurch geschoben und eingerastet bzw. arretiert werden. Durch dieses Zusammenwirken entsteht eine Einrastverbindung 9. Dafür kann das Rastelement 13 auch einen Hinterschnitt aufweisen, in den ein Rand der Öffnung 14 eingreifen kann.

Das Profilsegment 8 weist ein trapezförmiges Profil auf, welches an seiner Rückseite 10 das mindestens eine Rastelement 13 aufweist und an seiner von dem Schellenband 2 abgewandten inneren Seite 11 geöffnet ist. Der Öffnungswinkel B zwischen den Profilflanke des Profilsegments 8 beträgt bei diesem Ausführungsbeispiel 90°. Der Öffnungswinkel B kann jedoch auch größer oder kleiner als 90° sein.

An der offen ausgestalteten inneren Seite 11 des Profilsegments 8 ist eine Lamelle 16 angeordnet. Die Lamelle 16 erstreckt sich in radialer Richtung R von dem Profilsegment 8 hinaus und ist in einen Schlitz des Dichtelements 12 eingeführt. Die Lamelle 16 kann formschlüssig oder stoffschlüssig mit dem Profilsegment 8 verbunden sein und somit das Dichtelement 12 zumindest in Umfangs- und/oder Axialrichtung ortsfest gegenüber dem Profilsegment positionieren. Dabei kann vorgesehen sein, in radialer Richtung keine Fixierung vorzusehen, um bei der durch das Spannen der Profilschelle auftretenden Durchmesserverringerung eine Relativbewegung zwischen dem Dichtelement und dem Profilsegment zu ermöglichen. Gemäß einer alternativen Ausgestaltung kann die Lamelle 16 ringförmig ausgeprägt sein und ohne eine feste Verbindung im Öffnungswinkel B der Profilsegmente verliersicher eingesetzt sein.

Die Profilsegmente 8 dienen zum Aufnehmen von nicht dargestellten Verbindungsflanschen zweier Leitungen. Vorzugsweise kann in axialer Richtung A beidseitig des Dichtelements 12 jeweils ein Verbindungsflansch einer Leitung angeordnet und durch das Schließen der Spanneinrichtung 3 die Verbindungsflansche mittels der Profilsegmente 8 axial aufeinander zu und gegen das Dichtelement 12 gepresst werden.

In der Fig. 3 ist eine Profilschelle 1 gemäß einem weiteren Ausführungsbeispiel dargestellt. Im Unterschied zur in Fig. 1 gezeigten Profilschelle 1 ist hier kein Dichtelement vorgesehen. Des Weiteren sind die Öffnungen 14 in Umfangsrichtung U deutlich größer dimensioniert als die Rastelemente 13 der Profilsegmente 8. Beispielsweise können die Öffnungen eine doppelte bis zehnfache Ausdehnung in Umfangsrichtung U gegenüber einer Ausdehnung der Rastelemente 13 aufweisen. Durch derartige längliche Öffnungen 17 können die Profilsegmente 8 an den eingerasteten Rastelementen 13 in Umfangsrichtung U bewegt werden. Dabei dienen die länglichen Öffnungen 17 als Führungen, in denen eine Bewegung der Profilsegmente 8 in Umfangsrichtung möglich wird. Da die Profilsegmente 8 an den Öffnungen 17 verschiebbar sind, kann eine Reibkraft beim Spannen der Profilschelle 1 zwischen den Profilsegmenten 8 und Verbindungsflanschen reduziert werden.

In der Fig. 4 ist der Querschnitt B-B aus Fig. 3 veranschaulicht. Hier wird verdeutlicht, dass die Rastelemente 13 durch einen Stanz-Biege-Prozess in die Profilsegmente 8 eingebracht wurden. Derartig ausgeprägte Profilsegmente 8 können aus einem Metallblech hergestellt werden. Die Rastelemente 13 sind in Axialrichtung A geringfügig größer als die Öffnungen 17 und können somit reibschlüssig und/oder formschlüssig in die Öffnungen eingesetzt werden.

Abhängig von der Form der Rastelemente 13 können die Profilsegmente 8 seitlich bzw. aus axialer Richtung schräg in die hierfür vorgesehenen Öffnungen 14, 17 einsetzbar sein. Alternativ können die Profilsegmente 8 in radialer Richtung R in den Öffnungen 14, 17 einrastbar sein.

Die Erfindung ist nicht auf eine der vorbeschriebenen Ausführungsformen beschränkt, sondern in vielfältiger Weise abwandelbar. So können beispielsweise auch mehr als zwei oder drei Profilsegmente vorgesehen sein. Ferner können die Profilsegmente beispielsweise auch mehrteilig mit zwei Flankenelementen ausgebildet sein, die jeweils über mindestens ein Rastelement verfügen, das in unterschiedliche oder gemeinsame Öffnungen im Schellenband aufgenommen wird.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Profilschelle
- 2: Schellenband
- 3: Spanneinrichtung
- 4: Spannbacke
- 5: Spannmittel
- 6: Verstellschraube des Spannmittels
- 7: Innenseite des Schellenbandes
- 8: Profilsegment
- 9: Einrastverbindung
- 10: Rückseite des Profilsegments
- 11: innere Seite des Profilsegments
- 12: Dichtelement
- 13: Rastelement
- 14: Öffnung
- 15: Vorsprung
- 16: Lamelle
- 17: längliche Öffnung

- A: axiale Richtung
- B: Öffnungswinkel des Profilsegments
- D: Abstand der Spannbacken
- R: radiale Richtung
- U: Umfangsrichtung

## Patentansprüche

1. Profilschelle (1) mit einem Schellenband (2) und einer Spanneinrichtung (3), wobei an einer Innenseite (7) des Schellenbandes (2) mindestens zwei umfangsseitig voneinander beabstandete Profilsegmente (8) angeordnet sind, wobei die Profilsegmente (8) über jeweils mindestens eine Einrastverbindung (9) mit dem Schellenband (2) verbunden sind, wobei das Schellenband (2) mindestens eine Öffnung (14) zum Ausbilden der Einrastverbindung (9) aufweist, wobei an einer dem Schellenband (2) zugewandten Rückseite (10) des Profilsegments (8) mindestens ein in die Öffnung (14) einsetzbares Rastelement (13) angeordnet ist, **dadurch gekennzeichnet, dass** die Öffnung (14) des Schellenbands (2) eine in Umfangsrichtung (U) des Schellenbandes (2) ausgerichtete längliche Form aufweist, wobei ein Dichtelement (12) an mindestens einem Profilsegment (8) positioniert ist, wobei das Dichtelement (12) an der dem Schellenband (2) abgewandten inneren Seite (11) der Profilsegmente (8) verläuft, wobei mindestens eine Lamelle (16) zum Befestigen des Dichtelements (12) an der dem Schellenband (2) abgewandten Seite (11) des Profilsegments (8) angeordnet ist.

2. Profilschelle nach Anspruch 1 , wobei das Rastelement (13) des Profilsegments (8) formschlüssig und/oder reibschlüssig in die mindestens eine Öffnung (14) des Schellenbands (2) einsetzbar ist.

3. Profilschelle nach Anspruch 1 oder 2, wobei das mindestens eine Rastelement (13) an der dem Schellenband (2) zugewandten Seite (10) des Profilsegments (8) angeordnet und stoffschlüssig mit dem Profilelement (8) ausgebildet ist.

4. Profilschelle nach einem der vorangehenden Ansprüche, wobei das mindestens eine Rastelement (13) gestanzt und/oder mittels Biegen in das Profilsegment (8) eingebracht ist.

5. Profilschelle nach einem der Ansprüche 1 bis 4, wobei das mindestens eine Profilsegment (8) ein rundes, ein rechteckiges, ein dreieckiges oder ein trapezförmiges Profil aufweist, welches an einer dem Schellenband (2) abgewandten inneren Seite (11) offen ist.

6. Profilschelle nach einem der Ansprüche 1 bis 5, wobei das Schellenband (2) aus einem anderem Material gebildet ist als die mindestens zwei Profilsegmente (8).

## Claims

1. Profiled clamp (1) having a clamping band (2) and a clamping device (3), wherein at least two profile segments (8) which are spaced apart from one another on the circumferential side are disposed on an inner side (7) of the clamping band (2); wherein the profile segments (8) are connected to the clamping band (2) by way of in each case at least one latching connection (9); wherein the clamping band (2) has at least one opening (14) for configuring the latching connection (9), wherein at least one latching element (13) which is able to be inserted into the opening (14) is disposed on a rear side (10) of the profile segment (8) that faces the clamping band (2), **characterized in that** the opening (14) of the clamping band (2) has an elongate shape which is directed in the circumferential direction (U) of the clamping band (2); wherein a sealing element (12) is positioned on at least one profile segment (8); wherein the sealing element (12) runs on the inner side (11) of the profile segments (8) that faces away from the clamping band (2); wherein at least one thin plate (16) for fastening the sealing element (12) is disposed on the side (11) of the profile element (8) that faces away from the clamping band (2).

2. Profiled clamp according to Claim 1, wherein the latching element (13) of the profile segment (8) is insertable into the at least one opening (14) of the clamping band (2) in a form-fitting and/or friction-fitting manner.

3. Profiled clamp according to Claim 1 or 2, wherein the at least one latching element (13) is disposed on the side (10) of the profile segment (8) that faces the clamping band (2) and is configured so as to be materially integral to the profile element (8) .

4. Profiled clamp according to one of the preceding claims, wherein the at least one latching element (13) is stamped and/or is incorporated in the profile segment (8) by means of bending.

5. Profiled clamp according to one of Claims 1 to 4, wherein the at least one profile segment (8) has a round, a rectangular, a triangular, or a trapezoidal profile which is open on an inner side (11) that faces away from the clamping band (2).

6. Profiled clamp according to one of Claims 1 to 5, wherein the clamping band (2) is formed from a material that is different from that of the at least two profile segments (8).

## Revendications

1. Collier profilé (1), comprenant une bande de collier (2) et un dispositif de serrage (3), dans lequel au moins deux segments profilés (8) espacés l'un par rapport à l'autre côté circonférence sont disposés sur une face intérieure (7) de la bande de collier (2), dans lequel les segments profilés (8) sont reliés à la bande de collier (2) par respectivement au moins un assemblage par encliquetage (9), dans lequel la bande de collier (2) présente au moins une ouverture (14) pour réaliser l'assemblage par encliquetage (9), dans lequel au moins un élément d'encliquetage (13) pouvant être inséré dans l'ouverture (14) est disposé sur une face arrière (10), tournée vers la bande de collier (2), du segment profilé (8),
**caractérisé en ce que** l'ouverture (14) de la bande de collier (2) présente une forme allongée orientée dans la direction circonférentielle (U) de la bande de collier (2), dans lequel un élément d'étanchéité (12) est positionné au niveau d'au moins un segment profilé (8), dans lequel l'élément d'étanchéité (12) s'étend sur la face intérieure (11), détournée de la bande de collier (2), des segments profilés (8), dans lequel au moins une lamelle (16) servant à fixer l'élément d'étanchéité (12) est disposée sur la face (11), détournée de la bande de collier (2), du segment profilé (8).

2. Collier profilé selon la revendication 1, dans lequel l'élément d'encliquetage (13) du segment profilé (8) peut être inséré par complémentarité de forme et/ou par friction dans ladite au moins une ouverture (14) de la bande de collier (2).

3. Collier profilé selon la revendication 1 ou 2, dans lequel ledit au moins un élément d'encliquetage (13) est disposé sur la face (10), tournée vers la bande de collier (2), du segment profilé (8) et est réalisé par liaison de matière avec l'élément profilé (8) .

4. Collier profilé selon l'une quelconque des revendications précédentes, dans lequel ledit au moins un élément d'encliquetage (13) est estampé et/ou introduit par pliage dans le segment profilé (8).

5. Collier profilé selon l'une quelconque des revendications 1 à 4, dans lequel ledit au moins un segment profilé (8) présente un profil rond, rectangulaire, triangulaire ou trapézoïdal qui est ouvert sur une face intérieure (11) détournée de la bande de collier (2).

6. Collier profilé selon l'une quelconque des revendications 1 à 5, dans lequel la bande de collier (2) est formée d'un autre matériau que les au moins deux segments profilés (8).
